# EUROPEAN PATENT SPECIFICATION

(11) **EP 2 581 467 B1**
(45) Date of publication and mention of the grant of the patent: **29.04.2020**
(21) Application number: 11792407.6
(22) Date of filing: 06.06.2011
(51) Int. Cl.: C23C 2/06, C23C 2/02, C23C 2/14, C23C 2/38

(54) **METAL PIPE FOR VEHICLE PIPING AND SURFACE TREATMENT METHOD FOR PIPE**
METALLROHR FÜR FAHRZEUGROHRLEITUNGEN UND OBERFLÄCHENBEHANDLUNGSVERFAHREN FÜR ROHRE
TUYAU DE MÉTAL POUR CANALISATIONS DE VÉHICULE ET PROCÉDÉ DE TRAITEMENT DE SURFACE CORRESPONDANT

(30) Priority: 09.06.2010 JP 2010131996
(43) Date of publication of application: 17.04.2013
(73) Proprietor: Sanoh Kogyo Kabushiki Kaisha, Tokyo 150 0013 (JP)
(72) Inventor: KON Takanori, Koga-shi Ibaraki 306-0041 (JP); OZAWA Juichi, Koga-shi Ibaraki 306-0041 (JP); OMOTE Kazuyuki, Koga-shi Ibaraki 306-0041 (JP)
(74) Representative: Liesegang, Eva
(86) International application number: PCT/JP2011/062948
(87) International publication number: WO 2011/155450

(56) References cited:
- JP-A- 1 099 707
- JP-A- 2 133 558
- JP-A- 8 283 925
- JP-A- H02 133 558
- JP-A- H08 283 925
- JP-A- 2002 167 657
- JP-A- 2003 055 750
- JP-A- 2003 055 750
- JP-A- 2003 166 078
- JP-A- 2003 166 078
- JP-A- 2006 037 207
- JP-A- 2006 037 207
- JP-A- 2007 070 729
- US-B1- 6 686 058

## Description

The present invention relates to the use of a plated metal pipe for vehicle piping..

### BACKGROUND ART

Very high corrosion resistance is a requisite for pipes forming brake lines and fuel lines arranged under the floor of an automobile or around the engine of the automobile. Usually, such pipes are zinc-plated and coated with a paint coating to enhance their corrosion resistance.

Electrogalvanizing, hot dipping aluminum coating and zinc-aluminum alloy coating called hot dipping galfan or Galvalium have been prevalent processes for coating metal pipes. Ordinarily, a plated film is coated with a fluorocarbon resin or the like because the corrosion resistance of a single plated film is insufficient. In such a case, the plated film is subjected to a chemical conversion coating process, such as a chromate treatment process, to improve adhesion and corrosion resistance prior to subjecting the primary coating to a coating process, the plated film is coated with a is coated with a primer, and then the plated film coated with the primer is coated with a polyamide resin or the like by extrusion molding. Particularly, when metal pipes are expected to be used in a corrosive environment that causes salt damage, it is essential to coat the metal pipes with a thick polyamide resin film by extrusion coating.

Generally, metal pipes used on a motor vehicle for piping are extended on the lower part of the body of a motor vehicle and exposed outside the body. Therefore, the metal pipes are hit by flying gravel and the coatings of the metal pipes are liable to be damaged.

Generally, the corrosion resistance of metal pipes coated with a primary coating and having a fluorocarbon resin film coating the primary coating is satisfactory in regions other than corrosive regions where salt damage is possible. However, those metal pipes are subject to impact by gravel. It is difficult to form a thick zinc coating by electrogalvanizing. Therefore, when the metal pipe is required to have high tip resistance, a zinc coating formed by electrogalvanizing is not sufficiently thick. In most cases, the outermost coating of a metal pipe is coated with a comparatively thick resin coating.

Hot-dip metal pipes for vehicle piping coated with a coating have been known. Most of such metal pipes are manufactured by processing a steel sheet coated with a coating formed by hot dipping. A known technique for coating a previously formed pipe by hot dipping is disclosed in Patent document 1.

Patent document 1: JPH08-197635 A
JP 2003 166078 A discloses a plated metal pipe formed by coating a base metal pipe with a hot dip coating containing 3-20% Al, 0.5-1.5% Mg, optionally traces of Sn and Cu, balance Zn and inevitable impurities.

### DISCLOSURE OF THE INVENTION

### Problem to be Solved by the Invention

Since the corrosion resistance of a single coating formed on a metal pipe by a conventional electrogalvanizing is inevitably insufficient, it is essential to coat the coating with an additional coating. Recently, requirements for corrosion resistance have become more and more severe. Therefore, the thickness of paint coatings has been progressively increased. The thickness of some paint coatings is in the range of 20 to 200 µm.

Generally, the adjacent ends of metal pipes used for vehicle piping are connected by a flared type pipe joint. Therefore, paint films and resin films coating the ends of the metal pipes need to be removed. Metal pipes for fuel lines are charged when fuel flows through the fuel lines. Therefore, those metal pipes need to be grounded to avoid sparking. Part of a thick resin film or a thick paint film formed on metal pipes must be removed for grounding.

In a metal pipe formed by processing a steel sheet coated with a coating by hot dipping, the coating on edges of the steel sheet forming a welded seam is cut off. Since the corrosion resistance of the welded seam is thus deteriorated, parts of the metal pipe forming the welded seam need to be mended. Mending complicates manufacturing processes. When a pipe is formed by processing a plated steel sheet, a plated coating coating the pipe is damaged when the plated steel sheet is deformed for processing. Thus, it is difficult to form pipes of a small outside diameter in the range of 4 to 10 mm.
Accordingly, it is an object of the present invention to solve problems in the conventional art and to provide the use of a metal pipe for vehicle piping coated with a coating having high corrosion resistance and formed by processing a metal pipe by hot dipping.

### Means for Solving the Problem

The present invention provides the use of a plated metal pipe for vehicle piping formed by coating a base metal pipe with a coating of a hot dipping alloy, wherein the coating has a high corrosion resistance, by hot dipping;
wherein the base metal pipe is a double-wall steel pipe formed by rolling up a Cu-plated steel sheet in a tubular shape, the Cu-plated steel sheet being composed of a base metal sheet and a plated Cu film coating the base metal sheet;
the hot dipping alloy is a Zn alloy and consists of 3 % by weight or above Al, 1 to 15 % by weight Mg, optionally 2% by weight or below in total of one or some of Cu, Mn, Si, Ca, Ti, B and Sn, and others including Zn and inevitable impurities, the melting point of the hot dipping alloy of Al, Mg and Zn being lower than those of the component metals of the alloy; and the plated metal pipe is not provided with a chemical conversion coating or a painted organic coating on the coating of the hot-dipping alloy.
Further embodiments are disclosed in the dependent claim.

### Effect of the Invention

The metal pipe for vehicle piping coated with a coating formed by hot dipping according to the present invention exhibits high corrosion resistance without requiring strengthening corrosion resistance by a paint film or a resin film.

### BRIEF DESCRIPTION OF THE DRAWINGS

Fig. 1 is a cross-sectional view of a metal pipe in a preferred embodiment of the present invention for vehicle piping;
Fig. 2 is a diagrammatic view of assistance in explaining a surface treating method of surface treating a base metal pipe to form a metal pipe for vehicle piping; and
Fig. 3 is a cross-sectional view of a hot dipping tank.

### BEST MODE FOR CARRYING OUT THE INVENTION

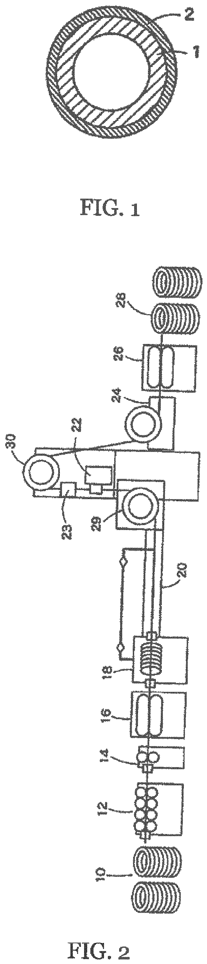

A metal pipe for vehicle piping will be described with reference to the accompanying drawings.
Referring to Fig. 1 showing a metal pipe 1 for vehicle piping in a
cross-sectional view, the metal pipe 1 has a surface coated with a coating 2 by hot dipping. The metal pipe 1 is intended for use as fuel lines and brake lines.

A double-wall steel pipe formed by rolling up a copper-plated steel sheet is used as a base pipe for forming the metal pipe 1. A seemless pipe, such as a drawn pipe, instead of a steel pipe, can also be used.

Although it is preferable that the base metal pipe for forming the metal pipe 1 is made of a steel when the metal pipe 1 is to be applied to vehicle fuel lines or vehicle brake lines, the base metal pipe for forming the metal pipe 1 may be made of one of alloys including iron alloys and aluminum alloys.

The composition of a hot-dip coating 2 coating the surface of the metal pipe 1 is 3 % by weight or above Al, 1 to 15 % by weight Mg, and others including Zn and inevitable impurities.

The melting point of an alloy of Al, Mg and Zn is lower than those of the component metals (Al: 660°C, Mg: 650°C and Zn: 419°C) of the alloy. For example, the melting point of an alloy containing 6% by weight Al, 3% by weight Mg and 91% by weight Zn is 380°C or lower.

Generally, when the base metal pipe for forming the metal pipe 1 is immersed in a molten metal bath of an alloy having a high melting point, other molten metals are easy to diffuse and penetrate into metal crystals of the base metal pipe. As the diffusion and penetration of metals proceed, mechanical properties of the base metal pipe deteriorate. In the worst case, it is possible that parts of the base metal pipe that permitted penetration crack and break.

Thus, it is advisable to use a hot-dipping alloy having a melting point far lower than that of the component metal of the base metal pipe for forming the metal pipe 1 to suppress penetration into the metallic material of the base metal pipe for forming the metal pipe 1.

When the base metal pipe for forming the metal pipe 1 is a Cu-plated double-wall steel pipe, molten Cu penetrates into the iron crystals if the melting point of the molten alloy is high because the melting point of Cu is 1083°C, which is far lower than the melting point of Fe.

When a Cu-plated base metal pipe for forming the metal pipe 1 is immersed in a molten metal bath of an alloy of the composition mentioned above, the penetration of Cu can be effectively suppressed because the melting point of the alloy of the molten metal bath is far lower than that of Cu.

Preferably, the hot dipping alloy contains 2% by weight or below in total of one or some of Cu, Mn, Si, Ca, Ti, B and Sn as an additive or additives.

The additives enhance bond between the base metal pipe and the coating and improves the workability of ends of the products. Excessive addition of the additives exceeding an additive content of 2% by weight is not only ineffective in improving bond strength, but also deteriorates the stretchability and workability of the alloy and promotes the oxidation of the molten metal bath for a hot dipping process. Oxides produced by the oxidation of the molten metal bath adhere to the coating to deteriorate the appearance of the coating. Thus, it is preferable to add the additives to the molten alloy bath in a proper total additive content not higher than 2% by weight, taking necessary bond strength into consideration.

The thickness of the coating 2 is in the range of 1 to 50 µm, preferably, in the range of 10 to 30 µm,

A surface-treating process for processing the base metal pipe for forming the metal pipe 1 for vehicle piping will be described with reference to Fig. 2.
Fig. 2 shows a surface-treating line. Indicated at 10 is an uncoiler for uncoiling a coiled base metal pipe from a base metal pipe coil. A straightening machine 12 for straightening the base metal pipe unwound from the base metal pipe coil and a roundness correcting machine 14 for correcting the roundness of the cross section of the base metal pipe are arranged below the uncoiler 10. Indicated at 16 is a feed machine for feeding the base metal pipe at a predetermined speed.

Indicated at 18 is a high-frequency furnace for heating the base metal pipe by means of high-frequency current. The base metal pipe heated by the high-frequency furnace 18 is fed into a reducing furnace 20 filled up with a mixed reducing gas of hydrogen and nitrogen. A hot dipping tank 22 is installed below the reducing furnace 20. An outside diameter measuring device 23, a cooling tank 24, a feed machine 26 and a coiling machine 28 are installed below the hot dipping tank 22. Processes will be described below.

### Straightening Process

A straightening process straightens the base metal pipe uncoiled from the base metal pipe coil, corrects the roundness of the base metal pipe and smoothes the surface of the base metal pipe. As shown in Fig. 2, the straightening machine 12 and the roundness correcting machine 14 carry out the straightening process.

As the base metal pipe for forming the metal pipe for vehicle piping is a double-wall steel pipe the base metal pipe is formed by rolling up a Cu-plated steel sheet twice. The base metal pipe is heated by a heating furnace or a high-frequency heating furnace or by passing electricity through the base metal pipe to bond together the overlapping walls of the steel sheet by melting a plated Cu film coating the base metal pipe. Ordinarily, the roundness of the double-wall steel pipe is not perfect, the surface is not smooth and irregularities of sizes in the range of several microns to several tens microns are formed on the surface at this stage.

If irregularities are formed on the surface of the double-wall steel pipe, the thickness of a coating formed by subjecting the double-wall steel pipe to hot dipping varies from part to part. Therefore, the straightening machine 12 straightens the double-wall steel pipe, and then the roundness correcting machine 14 smoothes the surface of the double-wall steel pipe. Preferably, an error in the straightness is 10 mm or below for 1 m.

The roundness correcting machine 14 passes the straightened double-wall steel pipe through skin pass rollers to reduce the sizes of irregularities on the surface of the double-wall steel pipe to 20 µm or below. Thus, the outside diameter of the double-wall steel pipe is corrected such that the variation of the outside diameter is within a tolerance of ±0.02 mm.

### Heating and Reducing Process

The base steel pipe is heated at a temperature in the range of 500°C to 700°C in the high-frequency furnace 18, and then the heated base steel pipe is fed into the reducing furnace 20 filled with a mixed reducing gas of hydrogen and an inert gas to remove an oxide film formed on the surface of the base steel pipe. The high-frequency furnace 18 sends nitrogen gas containing 5 to 20% by vol. hydrogen into the reducing furnace 20. The reducing furnace 20 removes an oxide film formed on the surface of the base steel pipe by the interaction of oxygen contained in the atmosphere and the base steel pipe. Thus, the oxide film is removed to improve bonding and corrosion resistance because the bond strength of bond between the base steel pipe and the plated film is reduced and the plated film cracks and comes off if the oxide film remains on the surface of the base steel pipe.

The heating and reducing process executed prior to subjecting the base steel pipe to a hot dipping process has the following advantages in addition to a simple cleaning effect. The heating and reducing process enhances affinity between a hot-dip coating and the base steel pipe. It is essential to securing bond between the hot-dip coating and the base steel pipe to form a thin alloy layer between the hot dip coating and the base steel pipe.

When the base steel pipe is subjected to the heating and reducing process prior to subjecting the same to the hot dipping process, the base steel pipe heated at a temperature equal to that of a molten alloy contained in the hot dipping tank 22 in the range of 300°C to 700°C can be continuously fed into the hot dipping tank 22. Consequently, formation of an alloy layer that enhances the bond between the hot-dip coating and the base steel pipe is promoted. The base steel pipe does not need to be heated again when the steel pipe is continuously fed into the hot dipping tank 22, which contributes to energy saving.

The surface of a base steel pipe to be coated by a conventional electrogalvanizing is cleaned with an alkaline chemical or an acid to remove stains and an oxide film. Since this embodiment removes stains and an oxide film from the surface of the base steel pipe by the reducing furnace 20 using a reducing gas, such as hydrogen, any waste liquid disposal facilities are unnecessary.

The mixed gas as the reducing gas may be a mixture of hydrogen and a rare gas (inert gas) such as argon gas for some material of the base metal pipe.

### Hot Dipping Process

A hot dipping process will be described.
The hot dipping tank 22 contains a molten hot dipping alloy containing 3% by weight Al or above, 1% to 15% by weight Mg and others including Zn and inevitable impurities and heated at a temperature in the range of 300°C to 700°C. The melting point of the alloy containing Al, Mg and Zn in the foregoing contents is lower than the respective melting points of the component metals of the alloy, namely, Al: 660°C, Mg: 650°C and Zn: 419°C.

Preferably, the molten hot dipping alloy contains 2% by weight or below in total of one or some of Cu, Mn, Si, Ca, Ti, B and Sn as an additive or additives.
A pulley 29 for converting the direction in which the base metal pipe is fed is disposed on the upstream side of the hot dipping tank 22. The pulley 29 is covered with a cover capable of shielding the pulley 29 from the atmosphere. The moving direction of the base metal pipe delivered from the reducing furnace 20 is converted by 90° to feed the base metal pipe in a vertical direction. The base metal pipe maintaining a heated state in which the base metal pipe is heated by the reducing furnace 20 is fed into the hot dipping tank 22.

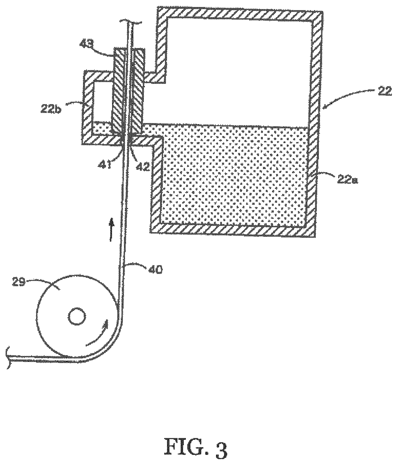

Fig. 3 is a sectional view of the hot dipping tank 22. The hot dipping tank 22 has a storage unit 22a for storing the molten alloy and a high-bottom unit 22b. An opening 41 is formed in the bottom wall of the high-bottom unit 22b. The base metal pipe 40 is fed into the high-bottom unit 22b through the opening 41. A sealing member 42 is fitted in the opening 41 so as to allow the base steel pipe 40 to pass through the opening 41. For example, the depth of the hot dipping alloy contained in the high-bottom unit 22b is in the range of about 10 to about 30 mm when the base metal pipe 40 has an outside diameter of 4.0 mm.

A blowing device 43 for adjusting the thickness of a coating is disposed in contact with the sealing member 42. The internal structure of the blowing device 43 is designed such that the surface of the molten alloy coating the base metal pipe 40 passing through the blowing device 43 is prevented from oxidation and the deposit thickness of the coating on the base metal pipe 40 can be adjusted.

The base metal pipe 40 is coated with a hot-dip coating while the same runs through the blowing device 43 disposed in the high-bottom unit 22b of the hot dipping tank 22. Since the hot dipping alloy contained in the high-bottom unit 22b is shallow and the base metal pipe 40 runs vertically, the base metal pipe 40 is coated with a hot-dip coating while the base metal pipe 40 passing through the hot dipping alloy in a very short time. Thus, the base metal pipe 40 is exposed to the high-temperature hot dipping alloy for a short time. Consequently, the surface of the base metal pipe 40 is prevented from oxidation and a high-quality hot-dip coating of a proper thickness can be formed.

The outside diameter of the metal pipe coated with the hot-dip coating is measured by the outside diameter measuring device 23, and then the running direction of the metal pipe coated with the hot-dip coating is converted by a pulley 30 such that the metal pipe coated with the hot-dip coating runs vertically down into the cooling tank 24.

The metal pipe thus manufactured by coating the base metal pipe in the hot dipping tank 22 is sprayed with water while the same is being fed by the feed machine 26, and then the metal pipe is coiled in a coil by the coiling machine 28.

Results of corrosion resistance tests of the metal pipe in this embodiment and a metal pipe in a comparative example will be described.

### Neutral Salt Spray Test

A metal pipe in an example coated with a 15 µm thick coating of a Zn alloy containing 6% by weight Al, 3% by weight Mg and 91% by weight Zn was tested by a neutral salt spray test specified in M104, JASO.

A metal pipe in a comparative example coated with a 13 µm thick Zn coating by electrogalvanizing was tested by the same neutral salt spray test.

There was not remarkable difference between the example and the comparative example in time in which white rust, namely, zinc hydroxide or zinc oxide, started to develop on the surface. White rust started to develop on both the example and the comparative example 240 hours after the neutral salt spray test had been started. Red rust, namely, iron oxide, started to develop on the surface of the comparative example 480 hours after the neutral salt spray test had been started. Any red rust was found on the surface of the example 5500 hours after the neutral salt spray test had been started. Development of red rust signifies the penetration of corrosion through the coating into the base metal pipe. It is known from the simple comparison of the results of the neutral salt spray tests that the corrosion resistance of the example is ten times higher than that of the comparative example.

### Combined Cycle Corrosion Test

Combined cycle corrosion test examines the development of corrosion by repeating a test cycle of a cycle time of 24 hours including successive execution of wetting, salt spraying, drying, wetting, drying and blowing.

A test metal pipe as an example was formed by coating a steel pipe with a 15 µm thick Zn alloy containing 6% by weight Al, 3% by weight Mg and 91% by weight Zn by hot dipping. A test metal pipe as a comparative example was formed by coating a steel pipe with a 22 µm thick Zn coating by electrogalvanizing. The example and the comparative example were subjected to combined cycle corrosion tests.

Red rust developed considerably on the comparative example coated by electrogalvanizing after 30 test cycles. Although white rust developed on the example coated by hot dipping after 30 test cycles, the example needed to undergo 120 test cycles to develop red rust on the example in the same degree as the red rust developed on the comparative example. The combined cycle corrosion test proved that the corrosion resistance of the example was about four times higher than that of the comparative example.

### Flying Gravel Test Combined with Combined Cycle Corrosion Test

Flying gravel test specified in M104, JASO blows 850 g of crushed stones against a test piece by air of 0.4 MPa.

A test metal pipe as an example was formed by coating a steel pipe with a 15 µm thick Zn alloy containing 6% by weight Al, 3% by weight Mg and 91% by weight Zn by hot dipping. A test metal pipe as a comparative example was formed by coating a steel pipe with a 22 µm thick Zn coating by electrogalvanizing, forming a chemical conversion layer on the Zn coating, covering Zn coating with an adhesive layer, and coating the Zn coating with a fluorocarbon resin. The flying gravel test was executed in one 24 hr cycle of the combined cycle corrosion test.

The flying gravel test combined with the combined cycle corrosion test can examine corrosion resistance under a condition similar to that of an ordinary working environment under the floor of a motor vehicle where pipes are damaged by impact by small stones.

Test results showed that the example processed only by hot dipping, and the comparative example processed by electrogalvanizing, chemical conversion and fluorocarbon resin coating were substantially equal in resistance to red rust development. Red rust developed on both the example and the comparative example after 130 test cycles.

It is known from the test results that the corrosion resistance of the metal pipe of the present invention finished simply by hot dipping is equal to that of the metal pipe in the comparative example provided with outermost layer of the fluorocarbon resin and the metal pipe of the present invention does not need any coating of a resin or the like.

## Claims

1. Use of a plated metal pipe for vehicle piping formed by coating a base metal pipe with a coating of a hot dipping alloy, wherein the coating has a high corrosion resistance;
wherein the base metal pipe is a double-wall steel pipe formed by rolling up a Cu-plated steel sheet in a tubular shape, the Cu-plated steel sheet being composed of a base metal sheet and a plated Cu film coating the base metal sheet;
the hot dipping alloy is a Zn alloy and consists of 3 % by weight or above Al, 1 to 15 % by weight Mg, optionally 2% by weight or below in total of one or some of Cu, Mn, Si, Ca, Ti, B and Sn, and others including Zn and inevitable impurities, the melting point of the hot dipping alloy of Al, Mg and Zn being lower than those of the component metals of the alloy; and
the plated metal pipe is not provided with a chemical conversion coating or a painted organic coating on the coating of the hot-dipping alloy.

2. Use of a plated metal pipe according to claim 1, wherein the thickness of the coating is in the range of 1 to 50 µm.

## Patentansprüche

1. Verwendung eines plattierten Metallrohrs für Fahrzeugrohrleitungen, gebildet durch Beschichten eines Grundmetallrohrs mit einer Beschichtung aus einer Schmelztauchlegierung, wobei die Beschichtung eine hohe Korrosionsbeständigkeit aufweist;
wobei das Grundmetallrohr ein doppelwandiges Stahlrohr ist, das durch Aufrollen eines Cu-plattierten Stahlblechs in eine röhrenförmige Gestalt gebildet ist, wobei das Cuplattierte Stahlblech aus einem Grundmetallblech und einem plattierten Cu-Film, mit dem das Grundmetallblech beschichtet ist, zusammengesetzt ist;
wobei die Schmelztauchlegierung eine Zn-Legierung ist und aus 3 Gewichts-% oder darüber Al, 1 bis 15 Gewichts-% Mg, wahlweise insgesamt 2 Gewichts-% oder darunter eines oder einiger von Cu, Mn, Si, Ca, Ti, B und Sn und anderen einschließlich Zn und unvermeidbarer Verunreinigungen besteht, wobei der Schmelzpunkt der Schmelztauchlegierung aus Al, Mg und Zn niedriger als diejenigen der Komponentenmetalle der Legierung ist; und
wobei das plattierte Metallrohr nicht mit einer chemischen Konversionsbeschichtung oder einer aufgestrichenen organischen Beschichtung auf der Beschichtung der Schmelztauchlegierung versehen ist.

2. Verwendung eines plattierten Metallrohrs nach Anspruch 1, wobei die Dicke der Beschichtung in dem Bereich von 1 bis 50 µm liegt.

## Revendications

1. Utilisation d'un tube en métal galvanisé pour des conduites de véhicule formées en appliquant sur un tube en métal de base un revêtement en alliage galvanisé à chaud, dans lequel le revêtement présente une forte résistance à la corrosion ;
dans laquelle le tube en métal de base est un tube en acier à double paroi formé en enroulant une tôle d'acier recouverte de Cu en une forme tubulaire, la tôle d'acier recouverte de Cu étant composée d'une tôle de métal de base et d'un film de Cu galvanisé appliqué sur la tôle de métal de base ;
l'alliage galvanisé à chaud est un alliage de Zn et se compose de 3% en poids ou plus de Al, de 1 à 15% en poids de Mg, éventuellement de 2% en poids ou moins au total d'un ou plusieurs de Cu, Mn, Si, Ca, Ti, B et Sn, et d'autres comprenant du Zn et des impuretés inévitables, le point de fusion de l'alliage galvanisé à chaud de Al, Mg et Zn étant inférieur à celui des métaux constituant l'alliage ; et
le tube en métal galvanisé n'est pas muni de revêtement de conversion chimique ou de revêtement organique peint sur le revêtement en alliage galvanisé à chaud.

2. Utilisation d'un tube en métal galvanisé selon la revendication 1, dans laquelle l'épaisseur du revêtement est de l'ordre de 1 à 50 µm.
